# EUROPÄISCHE PATENTANMELDUNG

(11) **EP 1 491 312 A2**
(43) Veröffentlichungstag der Anmeldung: **29.12.2004**
(21) Anmeldenummer: 04011540.4
(22) Anmeldetag: 14.05.2004
(51) Int. Cl.: B29C 33/32, B29C 44/12, B60R 13/02

(54) **Verfahren zum Herstellen eines geschäumten Fahrzeugteils sowie dadurch hergestelltes Dachmodul oder dadurch hergestellter Fahrzeuginnenhimmel**

(30) Priorität: 23.06.2003 DE 10328045
(71) Anmelder: ArvinMeritor GmbH, 63128 Dietzenbach (DE)
(72) Erfinder: Schönebeck, Horst, 63571 Gelnhausen (DE); Ludwig, Matthias, 38159 Vechelde (DE); Lutz, Marcus, 38518 Gifhorn (DE); Niebuhr, Frank, 38518 Wilsche (DE)
(74) Vertreter: Kitzhofer, Thomas, Dipl.-Ing.

(57) **Zusammenfassung**

Ein Verfahren zum Herstellen eines geschäumten Fahrzeugteils, inbesondere eines Karosserieanbauteils oder einer Fahrzeuginnenverkleidung sieht vor, daß ein Einlegerteil (42) mittels eines Magneten (54) im Schäumwerkzeug gehalten ist. Das Einlegerteil (42) wird in die durch Hinterschäumen hergestellte Schaumstoffschicht (60) eingebettet und dient der Arretierung von Anbauteilen.

## Beschreibung

Die Erfindung betrifft ein Verfahren zum Herstellen eines geschäumten Fahrzeugteils, insbesondere eines Karosserieanbauteils oder einer Fahrzeuginnenverkleidung.

Karosserieanbauteile sind solche Teile des Fahrzeugs, die nach der Montage die Außenhaut des Fahrzeugs abschnittsweise bilden. Derartige geschäumte Fahrzeuganbauteile sind beispielsweise Türen, Klappen, insbesondere jedoch Fahrzeugdachmodule. Fahrzeuginnenverkleidungen, die durch das erfindungsgemäße Verfahren hergestellt werden, sind insbesondere Fahrzeuginnenhimmel. Es besteht zunehmend der Wunsch, an solchen Fahrzeugbauteilen auswechselbare oder individuell positionierbare Funktionsbauteile zu befestigen. Derartige Funktionsbauteile sind beispielsweise Ablagen, verschließbare Konsolen, Bildschirme, Leuchtensysteme, Lautsprecher, Verschattungssysteme und dergleichen. Für diese Funktionsbauteile werden in der Hinterschäumung als Sockelbauteile wirkende Einleger eingebettet. Derartige Einleger sind aber bislang zum einen sehr schwer beim Schäumprozeß zu positionieren, zum anderen ist ein sauberer Übergang zwischen Einleger und dem üblicherweise vorgesehenen großflächigen Dekorteil (Kunststoffolie, Textil oder Blechfolie) sehr problematisch. Aus diesem Grund bleibt bislang das Dekorteil nämlich anfangs im Bereich des Einlegers geschlossen und wird erst anschließend von außen im Bereich des Einlegers durchstoßen, um z.B. eine Befestigungsschraube in den Einleger einzudrehen.

Die Erfindung schafft ein Verfahren, mittels dem die als Befestigungselemente dienenden Einleger einfach und sicher im Schäumwerkzeug positioniert werden können. Darüber hinaus schafft die Erfindung ein Fahrzeugdachmodul und einen Fahrzeuginnenhimmel mit einem universell verwendbaren Befestigungssystem für Anbauteile.

Das erfindungsgemäße Verfahren sieht folgende Verfahrensschritte vor:
a) ein als Befestigungselement für ein externes Anbauteil dienendes Einlegerteil wird mittels eines in einem Schäumwerkzeug integrierten Magneten befestigt,
b) in das Schäumwerkzeug wird flüssiger Kunststoff eingebracht,
c) das Schäumwerkzeug wird geschlossen, der Kunststoff geschäumt, und das Einlegerteil wird in den Kunststoff eingebettet.

Beim erfindungsgemäßen Verfahren kann die Innenseite des Schäumwerkzeugs sehr eben und absatzlos ausgeführt sein, was zu einer guten Oberflächenqualität des hergestellten Fahrzeugteils führt, dennoch ist das Einlegerteil lagesicher im Werkzeug positioniert, was mittels des zugeordneten Magneten erreicht wird. Aufwendige Unterdrucksysteme zum Halten des Einlegerteils oder dergleichen können entfallen, die zudem die Tendenz haben, den Schaum in Richtung des Ansaugkanals zu ziehen.

Bei der bevorzugten Ausführungsform ist vorgesehen, daß vor dem Schritt a) ein großflächiges Dekorteil in das Schäumwerkzeug gelegt wird, das an der Position des Einlegerteils ein Loch besitzt. Das Einlegerteil wird anschließend von außen durch den Magneten auf dem Dekorteil lagefest positioniert. Das Einlegerteil drückt das Dekorteil (Textil, Kunststoffolie, Al- oder Fe-Blech) im Bereich des Loches so gegen die Innenwand des Schäumwerkzeugs, daß es das Loch selbst gegen Schaumaustritt abdichtet.

Das Einlegerteil ragt bevorzugt durch das Loch hindurch in eine Öffnung an der Innenseite des Schäumwerkzeugs. Hier wird es vorzugsweise seitlich positioniert. Der Magnet übernimmt die Lagefixierung in Axialrichtung.

Als Magnet ist beispielsweise ein Ringmagnet vorgesehen, der die Öffnung, in die das Einlegerteil abschnittsweise ragt, umgibt. Der Ringmagnet sorgt für eine gleichmäßige Anziehungskraft des Einlegerteils und verhindert ein Verkippen desselben.

Das Einlegerteil hat z.B. einen Flansch und einen vom diesem abstehenden Stiftvorsprung, z.B. Gewindestiftvorsprung. Bei Verwendung z. B. einer Gewindebuchse hat der Magnet zusätzlich einen entsprechend vorstehenden Stift.

Wie sich herausgestellt hat, muß gerade bei hohen Schaumdrücken eine gewisse Dichtstrecke zwischen dem Einlegerteil und dem daran anliegenden Dekorteil vorgesehen sein, damit kein Schaum in den Bereich des Loches im Dekorteil gelangen kann. Bei der Erfindung ist vorgesehen, daß kein separates Dichtmittel zwischen diesen Teilen vorgesehen ist. Dennoch sollte z.B. bei einem zylindrischen Einlegerteil derjenige Teil des Flansches, der an der Rückseite des Dekorteils unmittelbar anliegt, einen Durchmesser haben, der 1,5- bis 3-mal größer ist als der Durchmesser des Loches, der im übrigen im wesentlichen dem Durchmesser des Stiftvorsprungs entspricht.

Die Erfindung ist insbesondere für Dachmodule, Hardtops, Innenhimmel und andere Kfz-Außen- und Innenverkleidungs-, Beplankungs- und Strukturbauteile zu verwenden, wobei das Hinterschäumen mittels der bekannten PUR S-RIModer LFI- (Long-Fiber-Injection) Verfahren erfolgt.

Der Einleger verfügt über ein Innen- oder Außengewinde, wie gemäß einer Ausführungsform vorgesehen ist. Darüber hinaus ist gemäß einer Ausführungsform ein langgestrecktes Profilteil als Einleger eingesetzt, das ein Befestigen des Anbauteils an beliebigen Stellen längs des Profilteils, ähnlich eines Schienensystems, erlaubt.

Das Profil ist zur Außenseite des Dekorteils vorzugsweise offen.

Über den Innenhimmel sind gemäß der bevorzugten Ausführungsform mehrere voneinander beabstandete Profilteile verteilt, so daß der Fahrzeugbenutzer an beliebigen Stellen Anbauteile anbringen kann.

Die Erfindung betrifft darüber hinaus ein Fahrzeugdachmodul und einen Fahrzeuginnenhimmel, die durch das erfindungsgemäße Verfahren hergestellt werden.

Weitere Merkmale und Vorteile der Erfindung ergeben sich aus der nachfolgenden Beschreibung und aus den nachfolgenden Zeichnungen, auf die Bezug genommen wird.

In den Zeichnungen zeigen:
- Figur 1 einen durch das erfindungsgemäße Verfahren hergestellten Fahrzeuginnenhimmel in Draufsicht auf seine Außenseite,
- Figur 2 eine Schnittansicht durch den Innenhimmel nach Figur 1 längs der Linie II-II,
- Figur 3 eine vergrößerte Schnittansicht durch den Innenhimmel im Bereich des mit X gekennzeichneten Bereichs in Figur 2,
- Figuren 4 bis 7 Schnittansichten durch den erfindungsgemäßen Innenhimmel, der mit verschiedenen Anbauteilen bestückt ist,
- Figur 8 eine Schnittansicht durch das für das erfindungsgemäße Verfahren vorgesehene Schäumwerkzeug, und
- Figur 9 eine vergrößerte Schnittansicht durch die beim erfindungsgemäßen Verfahren eingesetzte Fixierungsbuchse im Schäumwerkzeug.

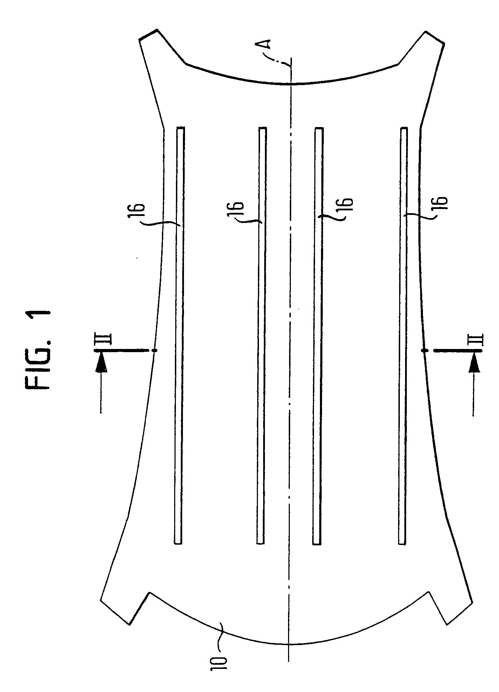

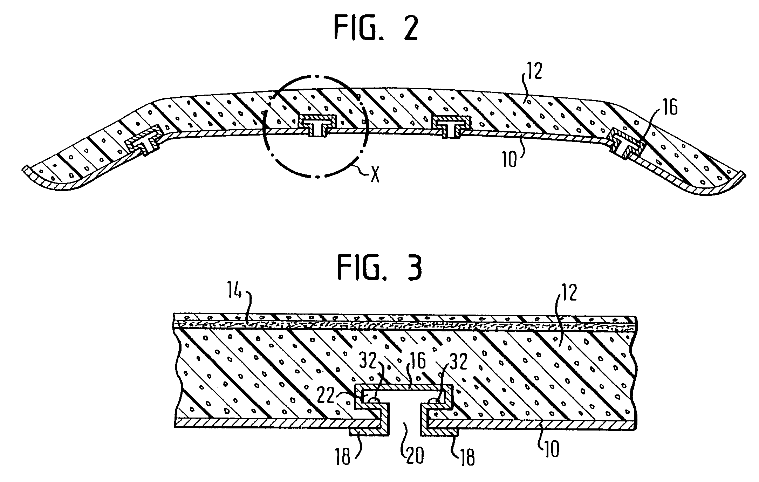

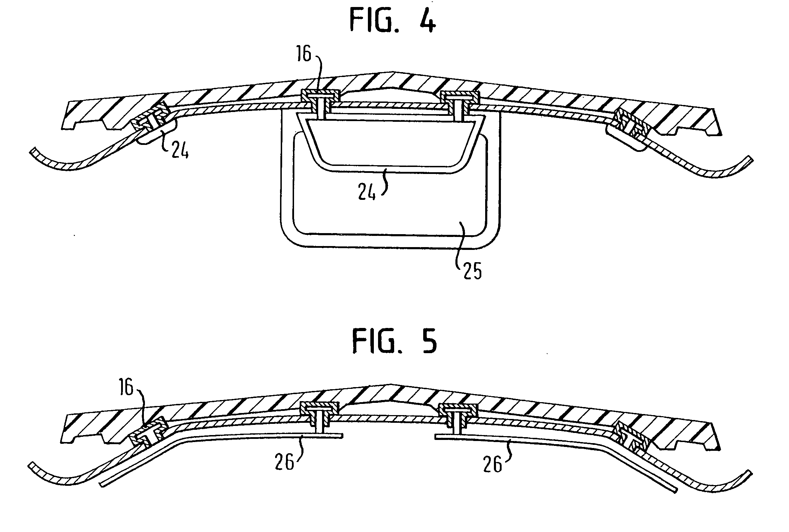

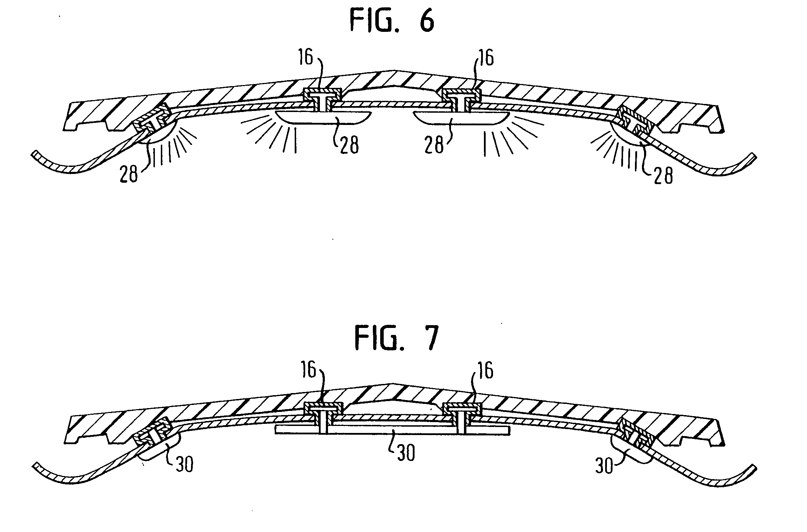

In Figur 1 ist ein mit dem später noch erläuterten erfindungsgemäßen Verfahren hergestellter Innenhimmel eines Fahrzeugs dargestellt, dessen Außenseite (Sichtseite) durch ein Dekorteil 10, z.B. ein Textil oder eine Folie, gebildet ist. Dieses Dekorteil 10 ist rückseitig hinterschäumt. Die durch die Hinterschäumung (siehe Figuren 2 und 3) hergestellte Schaumstoffschicht ist mit dem Bezugszeichen 12 versehen. In die Schaumstoffschicht 12 kann auch noch eine Verstärkungseinlage 14 eingebettet sein, z.B. eine Fasermatte oder dergleichen. Parallel zur Fahrzeuglängsachse A verlaufen mehrere parallele Einlegerteile, vorliegend in Form von offenen Hohlprofilen 16. Die Profile 16 haben eine Ω-förmige Querschnittsgestalt, wie am besten in Figur 3 zu sehen ist. Das Profil hat zwei flache, seitliche Flansche 18, die außenseitig an dem Dekorteil 10 anliegen, sowie eine schmale Durchgangsöffnung 20 und einen verbreiterten Hinterschnitt 22. In diesen Profilen 16 können von der Innenseite aus an beliebigen Positionen Anbauteile wie längsverstellbare und auswechselbare Konsolen 24, Bildschirme 25 (Figur 4), Rollos oder Sonnenschutzsysteme 26 (Figur 5), Lautsprecher 28 (Figur 6) oder Lichtquellen 30 (Figur 7) befestigt werden.

Damit die Lage des elektrischen Verbrauchers beliebig wählbar ist, sind im Hohlprofil 16 stromführende, längs des Hohlprofils 16 in dem Hinterschnitt 22 angeordnete Kontakte 32 vorgesehen (siehe Figur 3).

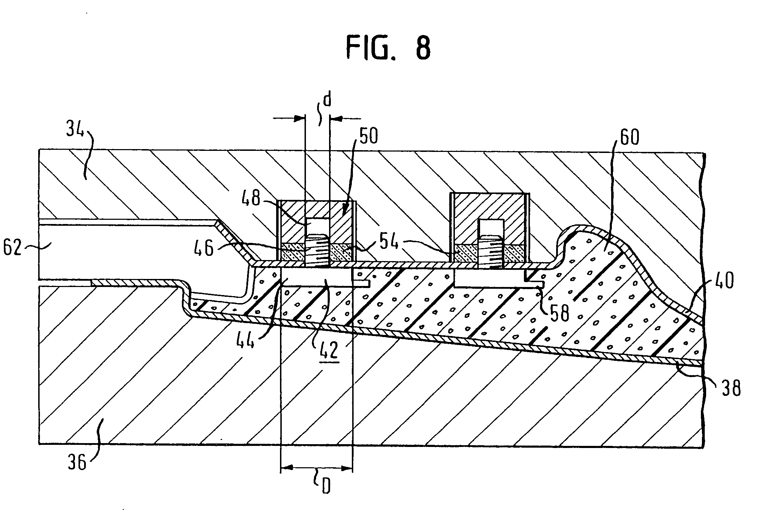

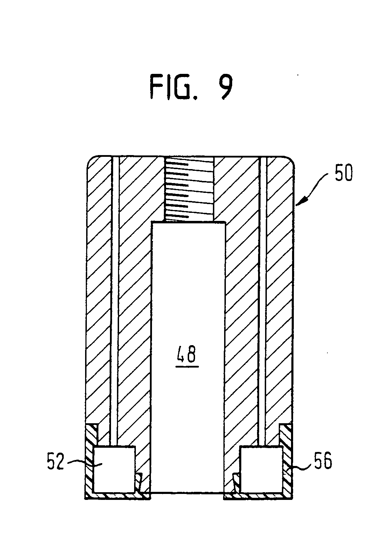

In den Figuren 8 und 9 ist das Schäumwerkzeug dargestellt, mit dessen Hilfe der gezeigte Innenhimmel, aber auch andere gezeigte Karosserieanbauteile wie die eingangs genannten Dachmodule, Türen und Klappen etc. hergestellt werden. Das Schäumwerkzeug besteht aus einem Ober- und Unterteil 34, 36, die beim Zusammenfahren einen Hohlraum bilden, der mit PUR-Material ausgeschäumt wird.

Bei der Ausführungsform nach Figur 8 wird ein Dachmodul geschäumt. Hierzu wird in das Unterteil 36 eine tiefgezogene, thermoplastische, durchgefärbte Folie 38 oder ein Aluminiumblech eingelegt. Dieses liegt auf der Innenseite des Unterteils 36 vollflächig an. Auf der Innenseite des Oberteils 34 wird ein folienartiges Dekorteil 40, ähnlich dem Dekorteil 10, befestigt. Anschließend werden im wesentlichen zylindrische Einlegerteile 42 von der Innenseite des Dekorteils 40 aus am Oberteil 34 befestigt. Im Randbereich des Oberteils 34 ist ein sogenannter Dekorspannrahmen 62 vorgesehen, der das Dekorteil 40 randseitig klemmt. Das Einlegerteil 42 hat einen Flansch 44, der vollflächig an der Innenseite des Dekorteils 40 anliegt. Von diesem Flansch 44 ragt ein Gewindebolzen 46 durch ein vorgefertigtes Loch im Dekorteil 40 in eine Öffnung 48 in einer Halterbuchse 50 im Oberteil 34. Der Durchmesser der Öffnung 38, der Durchmesser des Gewindebolzens 46 und der Durchmesser d des Lochs im Dekorteil 40 entsprechen einander. Die Halterbuchse 50 ist in Figur 9 noch einmal exakter gezeigt, sie hat neben der Öffnung 48 an ihrer unteren Stirnseite einen ringförmigen Aufnahmeraum 52 für einen Ringmagneten 54. Der Aufnahmeraum 52 wird durch einen Kunststoffring 56 nach außen geschlossen.

Im Bereich des Flansches 44 sind noch seitliche Fortsätze 58, beabstandet vom Dekorteil 40 vorgesehen, die die Verankerung des Einlegerteils 42 in der Schaumstoffschicht 60 verbessern.

Der Durchmesser D der Fläche des Flansches 44, die am Dekorteil 40 anliegt, ist etwa 1,5- bis 3-mal so groß wie der Durchmesser d des Loches im Dekorteil 40.

Das Einlegerteil 42 ist aus Metall oder hat zumindest eine Metalleinlage, so daß es der Ringmagnet 54 anzieht und der Flansch 44 fest gegen das Dekorteil 40 und dieses fest gegen die Innenseite des Oberteils 34 gepreßt wird. Das Einlegerteil 42 ist damit sowohl in axialer als auch in radialer Richtung positionsfest im Oberteil 34 gehaltert.

Anschließend wird flüssiges PUR-Material rückseitig auf die Folie 38 aufgebracht, wobei Glasfasern mit eingeschossen werden (LFI-Verfahren).

Ober- und Unterteil 34 bzw. 36 werden zusammengefahren. Das PUR-Material wird geschäumt und füllt den sich zwischen Ober- und Unterteil 34, 36 bildenden Hohlraum aus, um das Dekorteil 40 mit der Folie 38 zu verbinden. Das Einlegerteil 42 ist in die entstandene Schaumstoffschicht 60 fest eingebettet.

Das Einlegerteil 42 drückt so stark gegen das Dekorteil 40, daß kein Schaum zwischen beide Teile gelangt oder aus dem Loch im Dekorteil 40 austritt. Diese Dichtigkeit wird ohne elastische Dichtmittel oder dergleichen erreicht, die bislang auf der Innenseite des Oberteils 34 vorgesehen und ständig dem Verschleiß unterworfen waren.

Das Einlegerteil selbst muß nicht unbedingt aus Metall sein, um durch den Magneten positioniert zu werden. Es ist auch möglich, beispielsweise bei der Ausführungsform nach Figur 3, daß ein Hilfsbefestigungselement, z.B. eine Art schwenkbarer Nutenstein mit einem stiftartigen Fortsatz, nur der Befestigung wegen temporär in das Einlegerteil eingebracht wird, z.B. in das Hohlprofil 16, um in die Öffnung 48 zu ragen.

Bei der Ausführungsform nach den Figuren 1 bis 3 können die Flansche 18 im übrigen auch weggelassen werden, was dafür sorgt, daß das Hohlprofil 16 im Bereich des verbreiterten Hinterschnitts 22 auf der Innenseite des Dekorteils 10 anliegt. Die Dekorteile 10, 40 müssen auch nicht einlagig sein, sie können auch als mehrlagige, wenige mm dicke Folien ausgeführt und, wie in Figur 3 dargestellt, mit einer rückseitigen Verstärkungslage versehen sein. Auch bei der Ausführungsform nach den Figuren 1 bis 3 ist im übrigen ein Loch vor der Einbringung des Dekorteils 10 in das Schäumwerkzeug eingebracht worden, die aber hier als langer Schlitz ausgeführt wird.

### Bezugszeichenliste

- 10: Dekorteil
- 12: Schaumstoffschicht
- 14: Verstärkungseinlage
- 16: Hohlprofil
- 18: Flansch
- 20: Durchgangsöffnung
- 22: Hinterschnitt
- 24: Konsole
- 25: Bildschirm
- 26: Sonnenschutzsystem
- 28: Lautsprecher
- 30: Lichtquelle
- 32: Kontakt
- 34: Oberteil
- 36: Unterteil
- 38: Folie
- 40: Dekorteil
- 42: Einlegerteil
- 44: Flansch
- 46: Gewindebolzen
- 48: Öffnung
- 50: Halterbuchse
- 52: Aufnahmeraum
- 54: Ringmagnet
- 56: Kunststoffring
- 58: Fortsatz
- 60: Schaumstoffschicht
- 62: Spannrahmen

## Patentansprüche

1. Verfahren zum Herstellen eines geschäumten Fahrzeugteils, insbesondere eines Karosserieanbauteils oder einer Fahrzeuginnenverkleidung, **gekennzeichnet durch** folgende Schritte:
a) ein als Befestigungselement für ein Anbauteil dienendes Einlegerteil (42) wird mittels eines in einem Schäumwerkzeug integrierten Magneten (54) befestigt,
b) in das Schäumwerkzeug wird flüssiger Kunststoff eingebracht,
c) das Schäumwerkzeug wird geschlossen, der Kunststoff geschäumt und das Einlegerteil (42) wird in den Kunststoff eingebettet.

2. Verfahren nach Anspruch 1, **dadurch gekennzeichnet, daß** zwischen dem Einlegerteil (42) und der Innenseite des Schäumwerkzeugs ein großflächiges Dekorteil (10; 40) in das Schäumwerkzeug gelegt wird, das an der Position des Einlegerteils (42) ein Loch besitzt.

3. Verfahren nach Anspruch 2, **dadurch gekennzeichnet, daß** das Dekorteil (10; 40) vor dem Schritt a) in das Schäumwerkzeug gelegt wird und anschließend erst das Einlegerteil (42) von außen durch den Magneten (52) auf dem Dekorteil (10; 40) lagefest positioniert wird.

4. Verfahren nach Anspruch 3, **dadurch gekennzeichnet, daß** das Einlegerteil (42) das Dekorteil (10; 40) so druckdicht an die Innenseite des Schäumwerkzeugs preßt, daß kein Schaum durch das Loch hindurch zur Vorderseite des Dekorteils (10; 40) gelangt.

5. Verfahren nach einem der Ansprüche 2 bis 4, **dadurch gekennzeichnet, daß** das Einlegerteil (42) teilweise durch das Loch hindurch in eine Öffnung (48) an der Innenseite des Schäumwerkzeugs ragt.

6. Verfahren nach Anspruch 5, **dadurch gekennzeichnet, daß** die Öffnung (48) das Einlegerteil (42) seitlich positioniert.

7. Verfahren nach einem der vorhergehenden Ansprüche, **dadurch gekennzeichnet, daß** als Magnet ein Ringmagnet (54) verwendet wird.

8. Verfahren nach Anspruch 7 und zusätzlich nach Anspruch 5 oder Anspruch 6, **dadurch gekennzeichnet, daß** der Ringmagnet (54) die Öffnung (48) umgibt.

9. Verfahren nach einem der vorhergehenden Ansprüche, **dadurch gekennzeichnet, daß** das Einlegerteil (42) einen Flansch (44) und einen von diesem abstehenden stiftartigen Vorsprung besitzt.

10. Verfahren nach Anspruch 9, **dadurch gekennzeichnet, daß** zwischen dem Einlegerteil (42) und der Innenseite des Schäumwerkzeugs ein großflächiges Dekorteil (40) in das Schäumwerkzeug gelegt wird, das an der Position des Einlegerteils (42) ein Loch besitzt, und daß derjenige Teil des Flansches (44), der an der Rückseite des Dekorteils (40) anliegt, einen Durchmesser (D) hat, der 1,5- bis 3-mal so groß ist wie der Durchmesser (d) des Loches im Dekorteil (40).

11. Verfahren nach einem der Ansprüche 1 bis 9, **dadurch gekennzeichnet, daß** nach dem Schäumen das Einlegerteil eine von außen zugängliche Öffnung (20) hat.

12. Verfahren nach einem der Ansprüche 1 bis 9 oder 11, **dadurch gekennzeichnet, daß** das Einlegerteil ein langgestrecktes Profil (16) ist.

13. Verfahren nach Anspruch 12, **dadurch gekennzeichnet, daß** das Einlegerteil ein zur Außenseite des Dekorteils offenes Profil ist.

14. Verfahren nach einem der vorhergehenden Ansprüche, **dadurch gekennzeichnet, daß** mehrere voneinander beabstandete Profile (16) verwendet werden und über das Fahrzeugteil verteilt angeordnet sind.

15. Verfahren nach einem der Ansprüche 12 bis 14, **dadurch gekennzeichnet, daß** in dem Profilteil ein stromführender Kontakt (32) vorhanden ist, der in beliebiger Position einen längs des Profils (16) verstellbaren Verbraucher mit Strom versorgt.

16. Verfahren nach einem der Ansprüche 12 bis 15, **dadurch gekennzeichnet, daß** im Profil (16) eine längs desselben verstellbare Konsole (24), ein Bildschirm (25), ein Sonnenschutzsystem (26), ein Lautsprecher (28) und /oder eine Lichtquelle (30) befestigt sind/ist.

17. Fahrzeugdachmodul, hergestellt nach einem der vorhergehenden Ansprüche, **dadurch gekennzeichnet, daß** die Außenseite des Fahrzeugs durch eine tiefgezogene, durchgefärbte Folie (38) gebildet wird und die durch Schäumen hergestellte Schaumstoffschicht (60) die Folie (38) und das den Innenhimmel bildende Dekorteil (40) miteinander verbindet und daß das Einlegerteil (42) von der Außenseite des Dekorteils (40) aus zugänglich ist.

18. Fahrzeuginnenhimmel, hergestellt durch das Verfahren nach einem der Ansprüche 1 bis 16.
